# EUROPÄISCHE PATENTANMELDUNG

(11) **EP 1 354 762 A2**
(43) Veröffentlichungstag der Anmeldung: **22.10.2003**
(21) Anmeldenummer: 03004129.7
(22) Anmeldetag: 26.02.2003
(51) Int. Cl.: B60Q 1/14

(54) **Lenkstockschalter für ein Kraftfahrzeug**

(30) Priorität: 16.03.2002 DE 10211807
(71) Anmelder: Delphi Technologies Inc., Troy, MI 48007 (US)
(72) Erfinder: Dietrich, Andreas, 55452 Guldental (DE); Schimsheimer, Thomas, 55124 Mainz (DE); Grundmeier, Jürgen, 55595 Argenschwang (DE)
(74) Vertreter: Becker, Bernd, Dipl.-Ing.

(57) **Zusammenfassung**

Ein Lenkstockschalter für ein Kraftfahrzeug, insbesondere Blinkerschalter oder Wischer-Wascher-Schalter, umfasst einen Schalthebel (1), in den mindestens ein mit dem Bordnetz gekoppelter Einzelschalter (4) integriert ist. Der Einzelschalter (4) ist über ein den Schalthebel (1) durchragendes Stanzgitter (7) mit dem Bordnetz verbunden, wobei das Stanzgitter (7) für einen rechtsseitigen Lenkstockschalter und für einen linksseitigen Lenkstockschalter vor der Montage identisch ist und die Kontur des Stanzgitters (7) bei der Montage manuell an den Verlauf des Schalthebels (1) angepasst wird.

## Beschreibung

Die Erfindung bezieht sich auf einen Lenkstockschalter für ein Kraftfahrzeug, insbesondere Blinkerschalter oder Wischer-Wascher-Schalter, mit einem Schalthebel, in den mindestens ein mit dem Bordnetz gekoppelter Einzelschalter integriert ist.

Die DE 199 12 087 A1 offenbart einen Lenkstockschalter, der einen rotationssymmetrisch auf einer Längsachse eines Schalthebels des Lenkstockschalters angeordneten Drehschalter für die Front-Wischfunktionen umfasst. An dem freien Ende des Schalthebels ist ein Drucktastenschalter für eine Front-Waschfunktion angeordnet. Darüber hinaus ist auf dem Schalthebel dem Drehschalter für die Front-Wischfunktionen ein Drehschalter für die Heck-Wisch-/Waschfunktionen zugeordnet. Sowohl der Drehschalter für die Front-Wischfunktionen als auch der Drehschalter für die Heck-Wisch-/Waschfunktionen weist jeweils eine der Anzahl seiner Schaltstellungen entsprechende Anzahl von Kontaktbrücken auf, die zugehörige Schaltkontaktbahnen beaufschlagen. Die Kontaktbrücken sowie die zugeordneten Schaltkontaktbahnen verlaufen kreissegmentförmig zum Umfang eines Drehschaltgliedes des jeweiligen Drehschalters an einer Stirnseite des Drehschaltgliedes. Zur Betätigung der Front-Waschfunktion wird der zugeordnete Drucktastenschalter beaufschlagt, der über einen entsprechenden, mit einer Kontaktbrücke zusammenwirkenden Betätigungsstößel ebenfalls auf zugeordnete Schaltkontaktbahnen wirkt. Die Verbindung der Schaltkontaktbahnen zu Kontakten des Bordnetzes des Kraftfahrzeuges erfolgt mittels Anschlussleitungen, die an Anschlusskontakten befestigt sind und die durch die Längsachse des Lenkstockschalters geführt sind. Die Anzahl der Anschlussleitungen entspricht hierbei der Anzahl der Schalt kontaktbahnen.

Im Weiteren ist aus der Praxis ein als Blinkerschalter ausgebildeter Lenkstockschalter bekannt, in dessen Schalthebel ein Schiebschalter sowie ein Drehschalter zur Ansteuerung einer Geschwindigkeitskontrolleinrichtung, einem so genannten Tempomat, integriert sind. Die beiden Einzelschalter, nämlich der Schiebschalter und der Drehschalter, sind über Anschlussleitungen mit dem Bordnetz gekoppelt.

Bei der Integration eines Einzelschalter in einen Schalthebel ist es sonach erforderlich unter einem erheblichen Fertigungsaufwand die notwendigen Anschlussleitungen herzustellen und diese unter einem verhältnismäßig großen Montageaufwand sowohl mit den Anschlusskontakten des Einzelschalters als auch mit dem Bordnetz zu verbinden, da sich die Handhabung der flexiblen Anschlussleitungen bei dem relativ geringen Platzangebot innerhalb des Schalthebels schwierig gestaltet.

Es ist Aufgabe der Erfindung, einen Lenkstockschalter der eingangs genannten Art zu schaffen, dessen mindestens einer Einzelschalter technisch zuverlässig und dabei kostengünstig an das Bordnetz anzuschließen ist.

Erfindungsgemäß wird die Aufgabe dadurch gelöst, dass der Einzelschalter über ein den Schalthebel durchragendes Stanzgitter mit dem Bordnetz verbunden ist, wobei das Stanzgitter für einen rechtsseitigen Lenkstockschalter und für einen linksseitigen Lenkstockschalter vor der Montage identisch ist und die Kontur des Stanzgitters bei der Montage manuell an den Verlauf des Schalthebels angepasst wird.

Das Stanzgitter ist als einstückiges Bauteil während seiner Fertigung und bei der Montage in dem Schalthebel relativ leicht zu handhaben, da es starre Bereiche aufweist, die es stabilisieren. Darüber hinaus stellt das Stanzgitter eine zuverlässige Kopplung zwischen dem Einzelschalter und dem Bordnetz sicher. Durch die identische Ausgestaltung des Stanzgitters für einen rechtsseitigen Lenkstockschalter und für einen linksseitigen Lenkstockschalter ist dasselbe relativ kostengünstig in einer hohen Stückzahl zu fertigen. Die Anpassung des Stanzgitters an den Verlauf des Schalthebels des jeweiligen Lenkstockschalters erfolgt bei der Montage des Stanzgitters in dem Schalthebel, indem die Kontur des Stanzgitters bei der Montage manuell an den Verlauf des Schalthebels angepasst wird. Diese Anpassung kann werkzeuglos erfolgen. Diese Ausgestaltung des Stanzgitters stellt seine Verwendung beispielsweise in einem Blinkerschalter für ein rechtsseitig und ein linksseitig gelenktes Kraftfahrzeug, sicher. Es ist aber auch die Anordnung der Stanzgitter in einem rechtsseitigen Wischer-Wascher-Schalter und einem linksseitigen Blinkerschalter mit jeweils identischem Einzelschalter denkbar.

Zweckmäßigerweise weist das Stanzgitter zumindest zwischen einem Anschlussbereich für das Bordnetz und einem Kontaktbereich für den Einzelschalter eine U-förmige Ausbuchtung auf. Bevorzugt erstreckt sich die U-förmige Ausbuchtung über die gesamte Breite des Stanzgitters. Die U-förmige Ausbuchtung stellt einen Bereich mit einem geringen Widerstand gegen Verformung dar, so dass das Stanzgitter zur Anpassung an den Verlauf des Schalthebels in diesem Bereich relativ leicht gebogen werden kann, ohne dass die Strompfade des Stanzgitters in ihrem übrigen Verlauf einer signifikanten Verformung unterliegen. Darüber hinaus stellt die Ausbuchtung einen Toleranzausgleich in der Länge des Stanzgitters sicher.

Vorteilhafterweise ist das Stanzgitter zwischen dem Anschlussbereich und einem den Anschlussbereich mit dem Kontaktbereich verbindenden Zwischenbereich sowie zwischen dem Zwischenbereich und dem Kontaktbereich jeweils mit der U-förmigen Ausbuchtung versehen. Beispielsweise ist ein Z-förmiger Verlauf in der Horizontalen und der Vertikalen des Stanzgitters zur Anpassung an die korrespondierende Kontur des Schalthebels durch die beiden U-förmigen Ausbuchtungen möglich. Hierbei bilden der Anschlussbereich und der Kontaktbereich die beiden Schenkel und der Zwischenbereich den Steg der Z-Form. Diese Formgebung ist aus ergonomischen Gründen anstrebsam, da sie die Erreichbarkeit und damit die Handhabung des Schalthebels des Lenkstockschalters für einen Fahrer des Kraftfahrzeuges erleichtert.

Nach einer vorteilhaften Ausgestaltung des Erfindungsgedankens stellen die Scheitel der U-förmigen Ausbuchtungen Biegelinien für den vertikalen Verlauf dar und ein zwischen den beiden Schenkeln der Ausbuchtungen eingeschlossener Winkel ändert sich für den horizontalen Verlauf von Strompfad zu Strompfad in seiner Größe. Durch eine Abwinklung entlang der Biegelinien wird beispielsweise die vertikale Z-Form des Stanzgitters sichergestellt, die zum einem durch ein Auseinanderbiegen und zum anderen durch ein Zusammenbiegen der U-förmigen Ausbuchtung erreicht wird. Aufgrund der Änderung des Winkels zwischen den beiden Schenkeln der Ausbuchtung wird die rechtsseitige oder linksseitige Verwendung des Stanzgitters vorgegeben, da die Winkeländerung den horizontalen Verlauf des Stanzgitters beeinflusst.

Vorzugsweise ist der Winkel des untersten Strompfades zwischen dem Anschlussbereich und dem Zwischenbereich größer als der Winkel des obersten Strompfades. Um demgegenüber eine Richtungsänderung des Stanzgitters in seinem weiteren Verlauf zu bewirken, ist vorteilhafterweise der Winkel des untersten Strompfades zwischen dem Kontaktbereich und dem Zwischenbereich kleiner als der Winkel des obersten Strompfades. Zweckmäßigerweise ändern sich die Winkel zwischen benachbarten Strompfaden linear.

Um die Strompfade gegenseitig elektrisch zu isolieren und in dem Stanzgitter Bereiche mit einer relativ hohen Steifigkeit auszubilden, sind bevorzugt der Anschlussbereich, der Zwischenbereich sowie der Kontaktbereich des Stanzgitters unter Freilassung der Ausbuchtungen zumindest bereichsweise mit einem Kunststoff umspritzt.

Vorzugsweise ist ein erster Einzelschalter als Schiebeschalter ausgebildet, dessen Schaltkontakte aufweisendes Schiebeschaltglied im Kontaktbereich des Stanzgitters geführt ist, wobei die Schaltkontakte Strompfade des Stanzgitters beaufschlagen. Des Weiteren ist vorteilhafterweise ein zweiter Einzelschalter als Drehschalter ausgebildet, dessen im Kontaktbereich des Stanzgitters geführtes Drehschaltglied eine Schaltkontaktbahnen aufweisende Leiterplatte umfasst, wobei zugeordnete Strompfade des Stanzgitters endseitig als die Schaltkontaktbahnen beaufschlagende Kontaktfedern ausgeformt sind. Das Stanzgitter übernimmt sonach nicht nur die Funktion der Kopplung der Einzelschalter mit dem Bordnetz, sondern auch wesentliche Schaltfunktionen, da der Kontaktbereich ein Bestandteil von Kontakteinheiten der Einzelschalter ist.

Zur Reduzierung der Einzelteile des Lenkstockschalters ist bevorzugt in dem Kontaktbereich des Stanzgitters eine Führung für das Schiebeschaltglied und/oder das Drehschaltglied ausgebildet. Das Schiebeschaltglied und/oder das Drehschaltglied ist positionsgenau zu dem Kontaktbereich des Stanzgitters gelagert, wobei es nicht erforderlich ist, dass der jeweilige Einzelschalter zusätzliche Führungsmittel aufweist.

Um eine kostengünstige Anordnung der Führung zu erzielen, ist zweckmäßigerweise die Führung einstückig mit der Umspritzung des Stanzgitters im Kontaktbereich ausgeführt. Die Umspritzung des Stanzgitters und die Führung werden somit in einem Arbeitsgang gefertigt.

Vorteilhafterweise wirken das Stanzgitter und die Schaltkontakte des Schiebeschaltgliedes und/oder die Schaltkontaktbahnen des Drehschaltgliedes zur Übertragung der Schaltfunktionen in einem Binär-Code und/oder einem Widerstandscode zusammen. Dieses codierte Zusammenspiel bewirkt eine gegenüber der Anzahl der Schaltstellungen des Einzelschalters reduzierte Anzahl der Schaltkontakte bzw. Schaltkontaktbahnen, woraus ein geringer Platzbedarf innerhalb des Schalthebels und somit eine kompakte Bauweise desselben bei einer Vielzahl von Schaltstellungen resultiert. Mit der reduzierten Anzahl der Schaltkontakte bzw. Schaltkontaktbahnen ist auch eine Verringerung der Anzahl der Strompfade zur Verbindung der Einzelschalter mit dem Bordnetz des Kraftfahrzeuges gegeben und gleichzeitig eine hohe Schaltsicherheit gewährleistet.

Zur einfachen Montage ist der Schalthebel entlang seiner Längsachse in eine Oberschale und eine damit verklipsbare Unterschale unterteilt, zwischen denen das Stanzgitter gehalten ist.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand eines Ausführungsbeispieles unter Bezugnahme auf die zugehörigen Zeichnungen näher erläutert. Es zeigen:

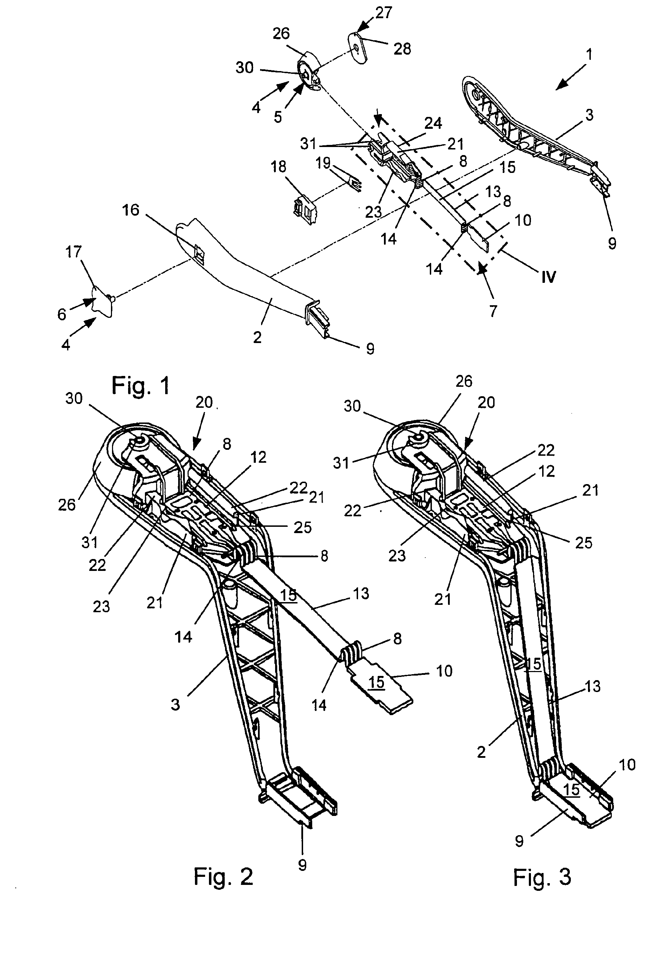

- Fig.1: eine Explosionsdarstellung eines Schalthebels eines erfindungsgemäßen Lenkstockschalters,
- Fig.2: eine perspektivische Darstellung eines teilweise montierten Lenkstockschalters gemäß Fig. 1,
- Fig.3: eine weitere perspektivische Darstellung eines teilweise montierten Lenkstockschalters gemäß Fig. 1,

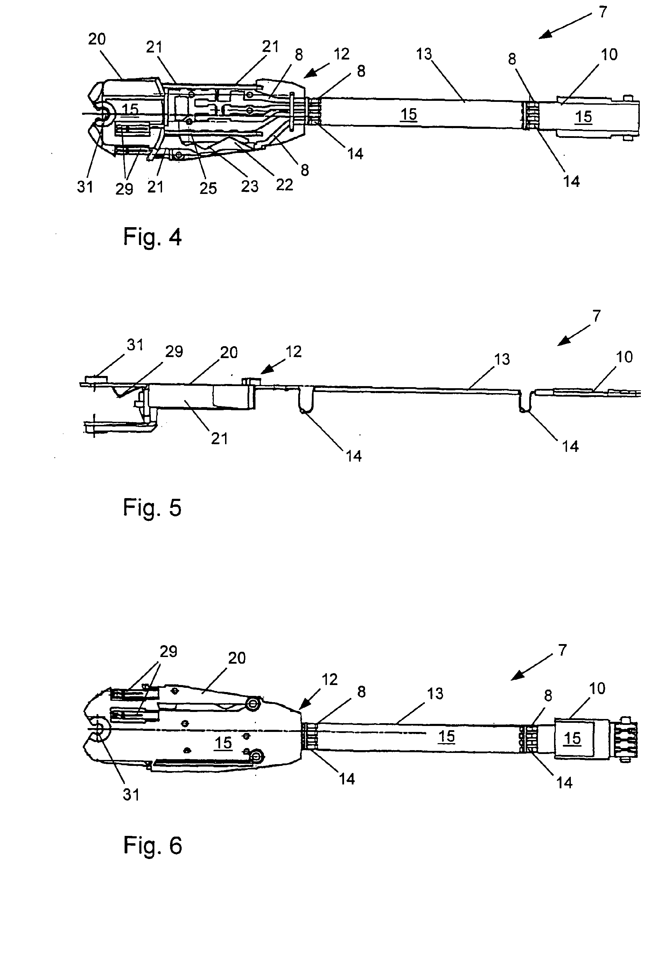

- Fig.4: eine vergrößerte Darstellung der Draufsicht auf die Einzelheit IV gemäß Fig. 1,
- Fig.5: eine vergrößerte Darstellung der Seitenansicht auf die Einzelheit IV gemäß Fig. 1 und
- Fig.6: eine vergrößerte Darstellung der Unteransicht auf die Einzelheit IV gemäß Fig. 1

Der Lenkstockschalter für ein Kraftfahrzeug umfasst einen Schalthebel 1, der im Wesentlichen aus einer Oberschale 2 und einer damit verklipsten Unterschale 3 zusammengesetzt ist und in den zwei Einzelschalter 4 integriert sind, von denen der eine als Drehschalter 5 und der andere als Schiebschalter 6 ausgebildet ist. Die beiden Einzelschalter 4 sind über ein Stanzgitter 7 an das Bordnetz angeschlossen, wobei das Stanzgitter 7 vor seiner Montage in dem Schalthebel 1 für einen auf einer rechten Seite eines Lenkrades verwendeten Lenkstockschalter identisch zu dem eines auf der linken Seite verwendeten Lenkstockschalters ist. Der Schalthebel 1 ist in einem nicht dargestellten Sockel des Lenkstockschalters zur Beaufschlagung von zugeordneten Schaltgliedern kreuzgelenkig gelagert.

Das Stanzgitter 7 ist im Wesentlichen in einen einem Fuß 9 des Schalthebels 1 zugeordneten Anschlussbereich 10 sowie einen dem freien Ende 11 des Schalthebels 1 zugeordneten Kontaktbereich 12 unterteilt, wobei der Anschlussbereich 10 über einen Zwischenbereich 13 des Stanzgitters 7 mit dem Kontaktbereich 12 verbunden ist. Das Stanzgitter 7 umfasst mehrere parallel zueinander ausgerichtete Strompfade 8. Sowohl zwischen dem Anschlussbereich 10 und dem Zwischenbereich 13 als auch zwischen dem Zwischenbereich 13 und dem Kontaktbereich 12 weisen die Strompfade 8 des Stanzgitters 7 jeweils eine U-förmige Ausbuchtung 14 auf. Zur Erzielung einer abschnittsweisen Steifigkeit des Stanzgitters 7 sowie zur elektrischen Isolation der Strompfade 8 sind der Anschlussbereich 10, der Kontaktbereich 12 und der Zwischenbereich 13 unter Freilassung der Ausbuchtungen 14 mit einem thermoplastischen Kunststoff 15 umspritzt.

Der als Schiebschalter 6 ausgebildete Einzelschalter 4 umfasst ein in eine Öffnung 16 der Oberschale 2 des Schalthebels 1 eingesetztes Betätigungselement 17, dem ein Schiebeschaltglied 18 mit als Kontaktfederarmen ausgebildeten Schaltkontakten 19 zugeordnet ist. Das Schiebschaltglied 18 ist in einer Führung 20 des Stanzgitters 7 im Kontaktbereich 12 gelagert, wobei die Führung 20 einstückig mit der Umspritzung der Strompfade 8 aus Kunststoff 15 ausgebildet ist. Die Führung 20 für das Schiebeschaltglied 18 ist im Querschnitt im Wesentlichen U-förmig ausgebildet, wobei jeder der gegenüberliegenden Schenkel 21 an seinem freien Ende einen Führungssteg 22 aufweist, der das zwischen die Schenkel 21 eingesetzte Schiebeschaltglied 18 bereichsweise übergreift. Einer der Schenkel 21 der Führung 20 ist mit einer mit dem Schiebeschaltglied 18 zusammenwirkenden Rastkurve 23 versehen. Der die Schenkel 21 der Führung verbindende Steg 24 weist zwei parallel sowie beabstandet zueinander angeordnete Gleitstege 25 auf, auf denen das Schiebschaltglied 18 aufliegt. Zwischen den Gleitstegen 25 sind die von den Schaltkontakten 19 des Schiebeschaltgliedes 18 beaufschlagten Strompfade 8 des Stanzgitters als Schaltkontaktbahnen ausgeführt.

Der als Drehschalter 5 ausgebildete Einzelschalter 4 ist am freien Ende 11 des Schalthebels 1 zwischen der Oberschale 2 und der Unterschale 3 angeordnet. Ein Drehschaltglied 26 des Drehschalters 5, das zugleich dessen Betätigungselement ist, steht mit einer mit Schaltkontaktbahnen 27 versehenen Leiterplatte 28 in drehfester Verbindung. Die Schaltkontaktbahnen 27 werden von Kontaktfedern 29 beaufschlagt, die an freien Enden zugeordneter Strompfade 8 des Stanzgitters 7 in dessen Kontaktbereich 12 ausgeformt sind. Das Drehschaltglied 26 weist zwei zentrisch angeordnete Trägerachsstummel 30 auf, die in entsprechenden Aussparungen 31 der Führung 20 des Kontaktbereichs 12 eingelassen sind, wobei die Führung 20 zur Lagerung des Drehschaltgliedes 26 gabelförmig geformt ist.

Zur Anpassung der Form des Stanzgitters 7 an die des Schalthebels 1 wird das Stanzgitter 7 bei seiner Montage in dem Schalthebel 1 im Bereich seiner U-förmigen Ausbuchtungen 14 manuell gebogen. Hierbei stellen die Scheitel der U-förmigen Ausbuchtung 14 Biegelinien für den vertikalen Verlauf des Stanzgitters 7 dar. Die U-förmigen Ausbuchtungen 14 zwischen dem Kontaktbereich 12 und dem Zwischenbereich 13 werden zusammengebogen und die U-förmigen Ausbuchtungen 14 zwischen dem Zwischenbereich 13 und dem Anschlussbereich 10 werden auseinandergebogen, so dass der Anschlussbereich 10 und der Kontaktbereich 12 den unteren und den oberen Schenkel einer Z-Form bilden und der Zwischenbereich 13 den die Schenkel verbindenden Steg darstellt. Im Weiteren wird das Stanzgitter 7 während seiner Montage in dem Schalthebel 1 auch in seinem horizontalen Verlauf im Bereich der U-förmigen Ausbuchtungen 14 in eine Z-Form abgewinkelt, wobei die zwischen den Schenkeln der Ausbuchtungen 14 der Strompfade 8 eingeschlossenen Winkel geändert werden.

## Patentansprüche

1. Lenkstockschalter für ein Kraftfahrzeug, insbesondere Blinkerschalter oder Wischer-Wascher-Schalter, mit einem Schalthebel (1), in den mindestens ein mit dem Bordnetz gekoppelter Einzelschalter (4) integriert ist, **dadurch gekennzeichnet, dass** der Einzelschalter (4) über ein den Schalthebel (1) durchragendes Stanzgitter (7) mit dem Bordnetz verbunden ist, wobei das Stanzgitter (7) für einen rechtsseitigen Lenkstockschalter und für einen linksseitigen Lenkstockschalter vor der Montage identisch ist und die Kontur des Stanzgitters (7) bei der Montage manuell an den Verlauf des Schalthebels (1) angepasst wird.

2. Lenkstockschalter nach Anspruch 1, **dadurch gekennzeichnet, dass** das Stanzgitter (7) zumindest zwischen einem Anschlussbereich (10) für das Bordnetz und einem Kontaktbereich (12) für den Einzelschalter (4) eine U-förmige Ausbuchtung (14) aufweist.

3. Lenkstockschalter nach Anspruch 2, **dadurch gekennzeichnet,dass** sich die U-förmige Ausbuchtung über die gesamte Breite des Stanzgitters (7) erstreckt.

4. Lenkstockschalter nach einem der Ansprüche 1 bis 3, **dadurch gekennzeichnet, dass** das Stanzgitter (7) zwischen dem Anschlussbereich (10) und einem den Anschlussbereich (10) mit dem Kontaktbereich (12) verbindenden Zwischenbereich (13) sowie zwischen dem Zwischenbereich (13) und dem Kontaktbereich (12) jeweils mit der U-förmigen Ausbuchtung (44) versehen ist.

5. Lenkstockschalter nach einem der Ansprüche 2 bis 4, **dadurch gekennzeichnet, dass** die Scheitel der U-förmigen Ausbuchtungen (14) Biegelinien für den vertikalen Verlauf darstellen und ein zwischen den beiden Schenkeln der Ausbuchtungen (14) eingeschlossener Winkel sich für den horizontalen Verlauf von Strompfad (8) zu Strompfad (8) in seiner Größe ändert.

6. Lenkstockschalter nach Anspruch 5, **dadurch gekennzeichnet,dass** der Winkel des untersten Strompfades (8) zwischen dem Anschlussbereich (10) und dem Zwischenbereich (13) größer als der Winkel des obersten Strompfades (8) ist.

7. Lenkstockschalter nach Anspruch 5, **dadurch gekennzeichnet,dass** der Winkel des untersten Strompfades (8) zwischen dem Kontaktbereich (12) und dem Zwischenbereich (13) kleiner als der Winkel des obersten Strompfades (8) ist.

8. Lenkstockschalter nach einem der Ansprüche 5 bis 7, **dadurch gekennzeichnet, dass** sich die Winkel zwischen benachbarten Strompfaden (8) linear ändern.

9. Lenkstockschalter nach einem der Ansprüche 2 bis 8, **dadurch gekennzeichnet, dass** der Anschlussbereich (10) sowie der Kontaktbereich (12) und/oder der Zwischenbereich (13) des Stanzgitters (7) unter Freilassung der Ausbuchtungen (14) zumindest bereichsweise mit einem Kunststoff (15) umspritzt sind.

10. Lenkstockschalter nach einem der Ansprüche 1 bis 9, **dadurch gekennzeichnet, dass** ein erster Einzelschalter (4) als Schiebeschalter (6) ausgebildet ist, dessen Schaltkontakte (19) aufweisendes Schiebeschaltglied (18) im Kontaktbereich (12) des Stanzgitters (7) geführt ist, wobei die Schaltkontakte (19) Strompfade (8) des Stanzgitters (7) beaufschlagen.

11. Lenkstockschalter nach einem der Ansprüche 1 bis 10, **dadurch gekennzeichnet, dass** ein zweiter Einzelschalter (4) als Drehschalter (5) ausgebildet ist, dessen im Kontaktbereich (12) des Stanzgitters (7) geführtes Drehschaltglied (26) eine Schaltkontaktbahnen (27) aufweisende Leiterplatte (28) umfasst, wobei zugeordnete Strompfade (8) des Stanzgitters (7) endseitig als die Schaltkontaktbahnen (27) beaufschlagende Kontaktfedern (29) ausgeformt sind.

12. Lenkstockschalter nach einem der Ansprüche 2 bis 11, **dadurch gekennzeichnet, dass** in dem Kontaktbereich (12) des Stanzgitters (7) eine Führung (20) für das Schiebeschaltglied (18) und/oder das Drehschaltglied (26) ausgebildet ist.

13. Lenkstockschalter nach Anspruch 12, **dadurch gekennzeichnet,dass** die Führung (20) einstückig mit der Umspritzung des Stanzgitters (7) im Kontaktbereich (12) ausgeführt ist.

14. Lenkstockschalter nach einem der Ansprüche 1 bis 13, **dadurch gekennzeichnet, dass** das Stanzgitter (7) und die Schaltkontakte (19) des Schiebeschaltgliedes (18) und/oder die Schaltkontaktbahnen (27) des Drehschaltgliedes (26) zur Übertragung der Schaltfunktionen in einem Binär-Code und/oder einem Widerstandscode zusammenwirken.

15. Lenkstockschalter nach einem der Ansprüche 1 bis 14, **dadurch gekennzeichnet, dass** der Schalthebel (1) entlang seiner Längsachse in eine Oberschale (2) und eine damit verklipsbare Unterschale (3) unterteilt ist, zwischen denen das Stanzgitter (7) gehalten ist.
